# EUROPÄISCHE PATENTSCHRIFT

(11) **EP 3 477 174 B1**
(45) Veröffentlichungstag und Bekanntmachung des Hinweises auf die Patenterteilung: **21.07.2021**
(21) Anmeldenummer: 18199951.7
(22) Anmeldetag: 11.10.2018
(51) Int. Cl.: F16L 5/04, A62C 2/06

(54) **BRANDSCHUTZMANSCHETTE SOWIE GEHÄUSE DAFÜR UND DIESE AUFWEISENDE WAND- ODER DECKENDURCHFÜHRUNG**
FIRE PROTECTION COLLAR AND HOUSING THEREFOR AND WALL OR CEILING FEEDTHROUGH HAVING SAME
MANCHETTE DE PROTECTION CONTRE L'INCENDIE AINSI QUE LOGEMENT CORRESPONDANT ET TRAVERSÉE DE PAROI OU DE PLAFOND COMPORTANT LADITE MANCHETTE DE PROTECTION CONTRE L'INCENDIE

(30) Priorität: 13.10.2017 DE 102017123942
(43) Veröffentlichungstag der Anmeldung: 01.05.2019
(73) Patentinhaber: Rolf Kuhn GmbH, 21217 Seevetal (DE)
(72) Erfinder: Lutters, Andreas, 57080 Siegen (DE); Quast, Markus, 57482 Wenden (DE); Schreckegast, Marcel, 57319 Berleburg (DE); Stauffer, Jürgen, 91187 Röttenbach (DE)
(74) Vertreter: Kastel, Stefan

(56) Entgegenhaltungen:
- EP-A1- 0 486 299
- EP-A1- 1 422 459
- EP-A1- 2 682 657
- EP-A2- 0 982 522
- EP-A2- 2 572 760
- DE-B4-102004 055 928
- DE-U1- 20 000 241

## Beschreibung

Die Erfindung betrifft ein Gehäuse für eine Brandschutzmanschette zum Abschotten einer Wand- oder Deckendurchführung für eine Leitung im Brandfall. Die Brandschutzmanschette umfasst wenigstens einen Streifen aus intumeszierendem Brandschutzmaterial und das Gehäuse zum Fixieren des Brandschutzmaterials auf der Leitung.

Derartige Brandschutzmanschetten sowie entsprechende Wand- oder Deckendurchführungen sind insbesondere aus den folgenden Literaturstellen bekannt:
[1] DE 10 2004 055 928 B4;
[2] Allgemeine bauaufsichtliche Zulassung Nr. Z-19.17-1651, vom 18.12.2014, heruntergeladen aus dem Internet am 11. Oktober 2017;
[3] Europäische technische Zulassung ETA-13/0640, heruntergeladen aus dem Internet am 11. Oktober 2017;
[4] System Nr. F-A-2129, veröffentlicht am 09. Juni 2004, 2004 über die Zulassungsdatenbank der Underwriters Laboratories Inc.
[5] DE 200 00 241 U1

Bei den aus [1] und [2] vorgesehenen Brandschutzmanschetten sind mehrere Streifen Brandschutzmaterial an der Innenseite eines im Wesentlichen aus einem Blechmantel, insbesondere Stahlblechmantel, gebildeten Gehäuses vorgesehen. Das Gehäuse ist in Umfangsrichtung in mehrere Gehäuseteile unterteilt, wobei deren Innenwandungen jeweils entsprechende Längen von Streifen von Brandschutzmaterial aufweisen. Insbesondere sind zwei Gehäuseteile vorgesehen, die jeweils halbkreisbogenförmig geformt sind und somit jeweils eine Hälfte des Gehäuses bilden. An ihren zueinander gerichteten Endbereichen werden die Gehäusehälften beim Umlegen um eine Rohrleitung miteinander verhakt. Für stark variierende Rohrdurchmesser müssen jeweils gesonderte Größen von Brandschutzmanschetten vorgesehen sein. Eine Variierung des Rohrdurchmessers ist durch Verwendung von mehr oder weniger Lagen an Brandschutzmaterial möglich.

Bei den aus den Literaturstellen [3] und [4] bekannten Brandschutzmanschetten werden die Streifen aus Brandschutzmaterial zunächst in einer oder mehreren Lagen um die zu sichernde Leitung, wie insbesondere ein Kunststoffrohr oder dergleichen, geschlungen. Anschließend wird das Brandschutzmaterial auch hier durch ein Gehäuse fixiert. Das Gehäuse hat einen Mantel, insbesondere aus Metallblech und mehr insbesondere aus Stahlblech, der um diese herumgewickelten Lagen von Brandschutzmaterial herum geführt wird und anschließend befestigt wird. Bei der Brandschutzmanschette gemäß [3] erfolgt eine Befestigung mittels Metallhaken, die an die Wand oder Decke geschraubt werden, durch welche die Leitung geführt ist. Bei der aus [4] bekannten Brandschutzmanschette erfolgt die Befestigung des Gehäuses mittels einer oder mehreren Schlauchschellen, die um das Gehäuse geführt werden und das Gehäuse verspannen.

Aus [5] ist eine Vorrichtung zur Abdichtung von Mauerdurchführungen für Rohre aus Metall oder nicht brennbaren Material bekannt. Diese weist ein in [5] als Rohrmanschette bezeichnetes Gehäuse auf. Das Gehäuse ist als Winkelprofilteil ausgebildet, das im Querschnitt ausgehend von einem mittleren Basisschenkel zwei wechselseitig abragende Anlageschenkel aufweist. Das Gehäuse wird um das Rohr herum gelegt und durch einen Verschluss mit endseitigen Hakenteilen und Ösenteilen gehalten. Hierzu ist ein Endbereich des Gehäuses als Lasche ausgebildet, das mittig ein Hakenteil aufweist. In der Mitte des anderen Endbereiches des Gehäuses sind mehrere in Längsrichtung beabstandete Ösenteile ausgebildet. Durch die gewinkelte Form des als Winkelprofilteil ausgebildeten Gehäuses wird zwischen dem Rohr und dem Basisschenkel ein ringförmiger Hohlraum gebildet, der durch Dämmungsmaterialien und eine Brandschutzabdeckung verschließbar ist.

Ausgehend vom Stand der Technik nach [1] bis [4] ist es Aufgabe der Erfindung, eine Brandschutzmanschette für ein Kunststoffrohr oder dergleichen brennbare Leitung zu schaffen, die unter Anpassungsmöglichkeit an unterschiedliche Durchmesser der zu schützenden Leitung leichter montierbar ist.

Zum Lösen dieser Aufgabe schafft die Erfindung ein Gehäuse für eine Brandschutzmanschette mit den Merkmalen des Anspruchs 1. Ein Gehäuse für eine solche Brandschutzmanschette sowie eine Wand- oder Deckendurchführung unter Verwendung einer solchen Brandschutzmanschette sind Gegenstand der Nebenansprüche.

Vorteilhafte Ausgestaltungen der Erfindung sind Gegenstand der Unteransprüche.

Gemäß einem Aspekt schafft die Erfindung eine Brandschutzmanschette zum Abschotten einer Wand- oder Deckendurchführung für eine Leitung, mit wenigstens einem Streifen aus intumeszierendem Brandschutzmaterial und einem Gehäuse zum Fixieren des Brandschutzmaterials auf der Leitung, wobei das Gehäuse einen Verschluss zum aneinander Fixieren eines ersten und eines zweiten Endbereiches des um die Leitung geschlungenen Gehäuses aufweist, wobei der Verschluss an dem ersten Endbereich wenigstens einen seitlichen ersten Schlitz aufweist, der sich in einer Richtung quer zu der Erstreckungsrichtung des Gehäuses erstreckt und an einer ersten Längsseite des Gehäuses offen mündet, und an dem zweiten Endbereich mehrere in Erstreckungsrichtung des Gehäuses beabstandete seitliche zweite Schlitze aufweist, die sich in einer Richtung quer zu der Erstreckungsrichtung des Gehäuses erstrecken und an der zweiten Längsseite des Gehäuses offen münden, wobei der erste und der zweite Endbereich mit ihren Schlitzen ineinanderhakbar sind.

Es ist bevorzugt, dass der Verschluss an dem ersten Endbereich mehrere in Längsrichtung des Gehäuses beabstandete erste Schlitze aufweist.

Es ist bevorzugt, dass die Anordnung erster Schlitze an dem ersten Endbereich punktsymmetrisch zu der Anordnung zweiter Schlitze an dem zweiten Endbereich ist.

Es ist bevorzugt, dass das Gehäuse in mehrere Teilgehäuse unterteilt ist, die aneinander anlenkbar sind.

Es ist bevorzugt, dass ein erstes und ein zweites Teilgehäuse mittels eines Scharniers aneinander angelenkt sind, welches einen Haken an dem ersten Teilgehäuse und eine Hakenaufnahmeöffnung an dem zweiten Teilgehäuse aufweist.

Es ist bevorzugt, dass an der Innenseite eines jeden Teilgehäuses wenigstens ein Streifen des Brandschutzmaterials befestigt ist.

Es ist bevorzugt, dass sich die Schlitze von der jeweiligen Längsseite bis zur Mitte des Gehäuses erstrecken.

Es ist bevorzugt, dass das Gehäuse mehrere ausbiegbare Laschen zum Fixieren des wenigstens einen Streifen aus Brandschutzmaterial an der Innenseite des Gehäuses aufweist.

Es ist bevorzugt, dass die oder wenigstens eine oder einige der ausbiegbaren Laschen eine Spitze zum Einstechen in den wenigstens einen Streifen aus Brandschutzmaterial aufweisen.

Es ist bevorzugt, dass die Spitze ein Widerhakenelement zum Festhalten des Brandschutzmaterials und/oder eine Pfeilspitzenform aufweist.

Es ist bevorzugt, dass die Laschen an einem Randbereich einer an einem Mantel des Gehäuses ausgebildeten, vollständig von dem Mantel umgebenen Öffnung ausgebildet sind und/oder von einer U-förmigen oder C-förmigen Ausstanzöffnung umgeben sind.

Gemäß dem breitesten Aspekt schafft die Erfindung ein Gehäuse für eine derartige Brandschutzmanschette nach einer der voranstehend ausgeführten Ausgestaltungen, umfassend einen Verschluss zum aneinander Fixieren eines ersten und eines zweiten Endbereiches des bei Benutzung der Brandschutzmanschette um eine Leitung geschlungenen Gehäuses, wobei der Verschluss an dem ersten Endbereich wenigstens einen seitlichen ersten Schlitz aufweist, der sich in einer Richtung quer zu der Erstreckungsrichtung des Gehäuses erstreckt und an einer ersten Längsseite des Gehäuses offen mündet, und an dem zweiten Endbereich mehrere in Erstreckungsrichtung des Gehäuses beabstandete seitliche zweite Schlitze aufweist, die sich in einer Richtung quer zu der Erstreckungsrichtung des Gehäuses erstrecken und an der zweiten Längsseite des Gehäuses offen münden, wobei der erste und der zweite Endbereich mit ihren Schlitzen ineinanderhakbar sind.

Vorzugsweise umfasst das Gehäuse weiter mehrere ausbiegbare Laschen zum Fixieren wenigstens einen Streifens Brandschutzmaterial an einer Innenwandung des Gehäuses.

Gemäß einem weiteren Aspekt schafft die Erfindung eine Wand- oder Deckendurchführung für ein Kunststoffrohr oder eine sonstige Leitung, umfassend wenigstens eine Brandschutzmanschette nach einer der voranstehend erläuterten Ausgestaltungen.

Eine bevorzugte Ausführungsform der vorliegenden Brandschutzmanschette dient zur Brandabschottung von Leitungen, wie z.B. Rohrleitungen, insbesondere mit einem Kunststoffrohr. Vorzugsweise ist die Brandschutzmanschette mit einem unter Hitzeeinwirkung expandierendem Material und einem das Rohr und das expandierende Material umgebenden Stahlblechgehäuse versehen. Die Brandschutzmanschette ist vorzugsweise derart ausgebildet, dass der Mantel der Brandschutzmanschette mindestens einen Halteabschnitt pro Manschettenhälfte zum Verschließen vorweist.

Vorzugsweise ist eine Brandschutzmanschette zur Brandabschottung von Leitungen mit einem unter Hitzeeinwirkung expandierendem Blähmaterial und einem Gehäuse vorgesehen. Das Gehäuse ist bevorzugt durch einen Mantel aus Stahl zum Halten des Blähmaterials und Verschließen der Brandschutzmanschette gebildet oder weist einen solchen auf.

Aufgrund von baurechtlichen Sicherheitsbestimmungen ist es notwendig, größere Gebäude in Brandabschnitte zur Vermeidung oder zumindest Verzögerung einer Brandausbreitung zu unterteilen. Leitungen, wie z.B. brennbare Rohre, brennbare Rohre mit brennbarer Isolierung, welche durch diese Brandabschnitte hindurchgeführt werden müssen, stellen kritische Stellen bei der Brandausbreitung über diese Brandabschnitte hinweg dar. Eine Lösung hierzu sieht vor, die zur Durchführung notwendigen Öffnungen, beispielsweise in Decken und Wänden, mit einer Brandschutzmanschette zu versehen, um die Brandausbreitung von einem Brandabschnitt in den nächsten zu verhindern.

Brandschutzmanschetten sind in vielfältigen Formen bekannt und können beispielsweise um die Leitung herumgelegt werden. Das intumeszierende Material dehnt sich unter Hitzeeinwirkung stark aus, um so die Öffnungen zusammen mit den durchgeführten Leitungen komplett zu verschließen. Ein Gasaustausch und eine Sauerstoffzufuhr in den Brandherd werden somit erschwert.

Eine bevorzugte Ausgestaltung der Brandschutzmanschette zeichnet sich dadurch aus, dass sich der Mantel in wenigstens zwei durch ein Scharnier verbundene Gehäuseteile, insbesondere Hälften, aufteilt. Vorteilhaft ist, wenn der Mantel Befestigungsmittel zur Befestigung der Brandschutzmanschette an der Wand, einer Decke oder dergleichen aufweist. Durch derartige Befestigungsmittel kann die Brandschutzmanschette sicher und einfach befestigt werden, ohne dass die Gefahr besteht, dass sie sich beispielsweise unter ihrem Eigengewicht verschiebt. Vorzugsweise sind die Befestigungsmittel als Haltelaschen, welche Löcher, z.B. mit 0̸ 8,5 mm, aufweisen ausgebildet, durch welche Schrauben hindurchgeführt werden können.

Vorzugsweise wird das intumeszierende Material kraftschlüssig oder formschlüssig durch Befestigungseinrichtungen, welche sich am Mantel befinden gehalten. Das intumeszierende Material ist durch die Befestigungseinrichtungen in seiner Position gehalten.

Der Mantel ist wahlweise zu öffnen und zu verschließen.

Weitere Vorteile bevorzugter Ausgestaltungen der Brandschutzmanschette ergeben sich durch eine Vielzahl von Aussparungen, welche beidseitig umlaufend unter 45 ° zum wahlweisen Anpassen des Umfangs des Mantels beim Verschließen der Brandschutzmanschette vorgesehen sind. Innerhalb der Vielzahl der Aussparungen kann die Brandschutzmanschette flexibel auf unterschiedliche (Nenn-) Durchmesser der Leitung angepasst werden, ohne dass hierzu weitere Brandschutzmanschetten oder zusätzliche Montageschritte erforderlich wären.

Auch kann hier ein Kraftschluss zwischen den Segmenten und der Leitung eingestellt werden. Es kann insbesondere eine Spannkraft eingestellt werden. Ein weiterer Vorteil besteht darin, dass die Brandschutzmanschette in diesem Fall direkt vor Ort um die Leitung herumgelegt und anschließend verschlossen werden kann. Dies ist insbesondere dann vorteilhaft, wenn ein bereits existierendes und geschlossenes Rohrleitungssystem vorhanden ist.

Gemäß einer besonders bevorzugten Ausgestaltung ist ein Verschluss der Manschette mit beidseitig spiegelsymmetrischen Halteausnehmungen, insbesondere in Form von Schlitzen, versehen.

Alternativ oder zusätzlich kann vorgesehen sein, dass an dem Gehäuse abbrechbare Haltelaschen vorgesehen sind. Dadurch kann unabhängig von den konkreten Gegebenheiten die Manschette montiert werden, indem eine störende Haltelasche abgebrochen wird.

Vorzugsweise ist die Haltelasche in Einhakvorrichtungen an dem Gehäuse einhakbar. Hierzu können in regelmäßigen Abständen an dem Gehäuse Vorsprünge, insbesondere Blechzungen oder dergleichen, oder Rücksprünge, wie z.B. Öffnungen, in einem Blechmantel vorgesehen sein, wobei dann an der abbrechbaren Haltelasche eine hierzu komplementäre Rücksprungsausbildung bzw. Vorsprungsausbildung ausgebildet ist, so dass die Haltelaschen an dem Gehäuse an einer wählbaren Stelle eingehakt werden können.

Demnach können Haltelaschen an dem Gehäuse eingehängt werden, insbesondere um Lücken an anderer Stelle zu schließen.

Vorzugsweise werden die Haltelaschen an einer gewünschten Position eingehangen und damit individuell positioniert. Bei einer weiteren möglichen Ausgestaltung ist die Länge des Gehäuses durch abbrechbare Segmente variierbar.

Bei einer weiteren vorzugsweisen Ausgestaltung, die zusätzlich zu der Ausgestaltung mit dem lageveränderlichen Verschluss vorgesehen sein kann, ist der Dämmschichtbildner durch Laschen an dem Gehäuse fixierbar. Insbesondere sind hierzu biegbare Laschen an dem Gehäuse vorgesehen. Besonders bevorzugt weisen die Laschen Spitzen auf, die in Streifendämmschichtmaterial eingestochen werden können. Die Spitzen können pfeilspitzenartige Formen aufweisen und somit eine Widerhakenausbildung aufweisen, um den Dämmschichtbildner zu fixieren.

Durch die Möglichkeit der Fixierung des Streifens an Brandschutzmaterial wird eine spannungsfreie Längenveränderung der Manschette möglich, ohne dass es z.B. durch verklebte Dämmschichtbildnerstreifen zu einem Komprimieren der Streifen kommt und dann zum Aufbäumen bzw. zur Faltenbildung bei den Streifen. Durch die Möglichkeit eines Einstechens in Streifen an Brandschutzmaterial kann die aus [3] und aus [4] bekannte Vorgehensweise beibehalten werden, wonach Streifen Brandschutzmaterial je nach Bedarf in mehreren Lagen um die Leitung herumgelegt werden können und erst anschließend diese durch Aufsetzen des Gehäuses an der Leitung fixiert werden. Beim Aufsetzen des Gehäuses dringen die umgebogenen Laschen mit ihren Spitzen in die Streifen aus Brandschutzmaterial ein und fixieren diese an dem Gehäuse.

Ein Ausführungsbeispiel der Erfindung wird im Folgenden anhand der Figuren 1 bis 6 näher erläutert. Darin zeigt:
- Fig. 1: eine Draufsicht auf eine erste Ausführungsform einer Brandschutzmanschette, die Streifen aus Brandschutzmaterial und ein Gehäuse umfasst;
- Fig. 2: eine Seitenansicht von unten von Fig. 1 gesehen auf die Brandschutzmanschette;
- Fig. 3: eine perspektivische Ansicht der Brandschutzmanschette aus Fig. 1;
- Fig. 4 + 5: Ansichten eines Details aus Fig. 3, welche einen Verschluss des Gehäuses zeigen;
- Fig. 6: eine perspektivische Ansicht eines Gehäuses für eine Brandschutzmanschette außerhalb der Erfindung;

- Fig. 7: ein Detail aus Fig. 6, welches einen Bereich des Gehäuses und eine abbrechbare Haltelasche zeigt;
- Fig. 8: ein Detail aus Fig. 7;
- Fig. 9: eine weitere perspektivische Ansicht des Gehäuses von Fig. 6;
- Fig. 10: ein Detail aus Fig. 9, welches eine Befestigungseinrichtung für Brandschutzmaterial der zweiten Ausführungsform der Brandschutzmanschette zeigt.

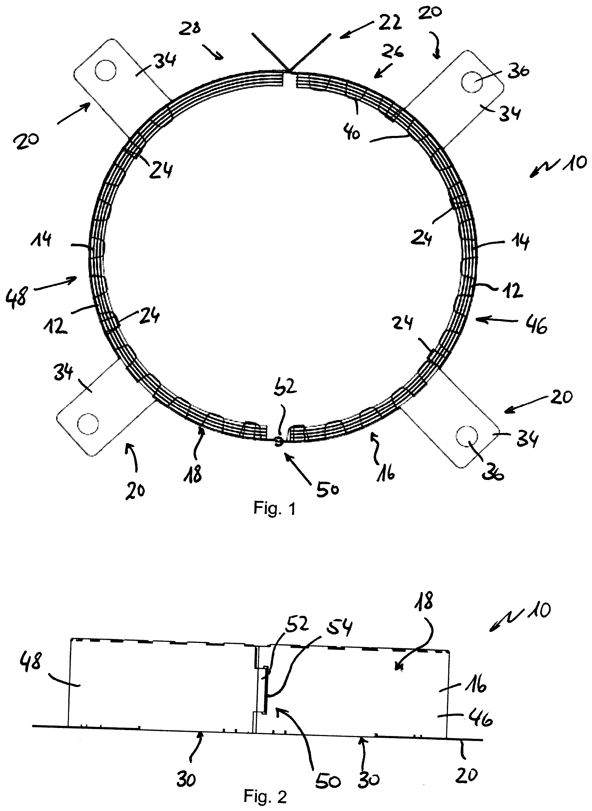

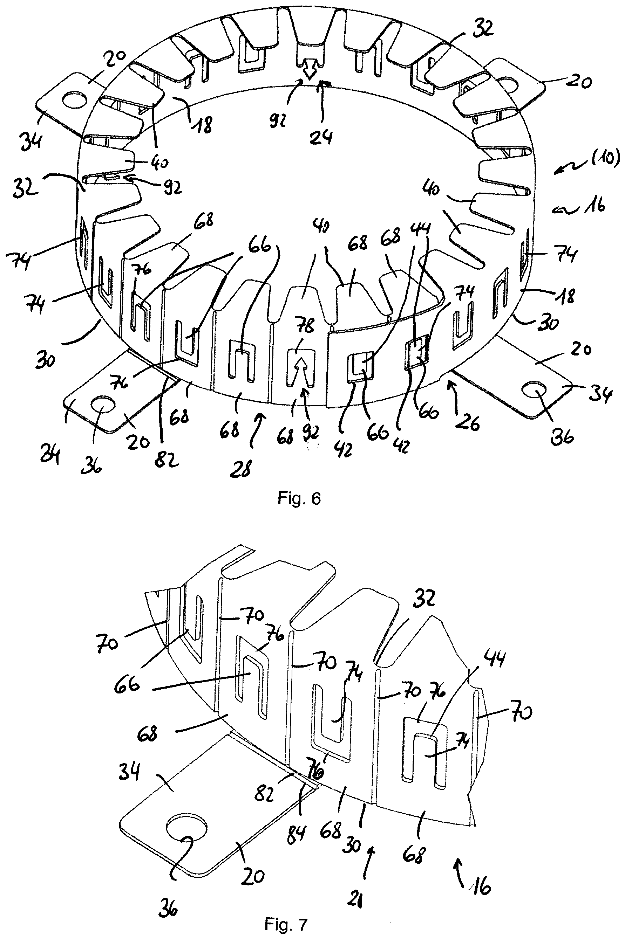

In den Figuren sind unterschiedliche Ausführungsformen von Brandschutzmanschetten 10 dargestellt, wobei in den Fig. 1 bis 5 eine erfindungsgemässe Ausführungsform einer Brandschutzmanschette 10 mit Streifen 14 aus Brandschutzmaterial 12 und einem Gehäuse 16 dargestellt ist und in den Fig. 6 bis 10 eine andere Form eines Gehäuses 16 für eine Brandschutzmanschette 10 dargestellt ist, wobei das Gehäuse 16 zusammen mit nicht näher dargestellten Streifen 14 aus Brandschutzmaterial 12 eine zweite Ausführungsform der Brandschutzmanschette 10 bildet. Im Folgenden werden zunächst gemeinsame Merkmale der verschiedenen gezeigten Ausführungsformen näher erläutert.

Bei beiden dargestellten Ausführungsformen ist das Gehäuse 16 aus Metallblech, insbesondere Stahlblech, gebildet und weist einen Mantel 18, Befestigungsmittel 20, einen Verschluss 22 und Befestigungseinrichtungen 24 auf.

Die Brandschutzmanschette 10 dient zum Abschotten von Öffnungen von Wänden und Decken, durch die eine oder mehrere Leitungen geführt sind, im Brandfall. Bei einer Wand- oder Deckendurchführung für Leitungen sollen diese bei Übergang von einem Brandabschnitt in einen anderen abgeschottet werden können. Hierzu dienen die Brandschutzmanschetten 10, die um die Leitungen herumgelegt werden können.

Die Brandschutzmanschetten 10 weisen Streifen 14 aus im Brandfall aufschäumendem Brandschutzmaterial 12 auf, die im Brandfall die Öffnungen, durch die die Leitungen hindurchgehen, verschließen. Als Leitungen kommen z.B. Kunststoffrohre oder sonstige Leitungen in Frage. Hierzu wird das Brandschutzmaterial 12 auf der Leitung (nicht dargestellt) angeordnet und mit dem Gehäuse 16 fixiert.

Hierzu wird der Mantel 18 auf die Streifen 14 aus Brandschutzmaterial 12 aufgelegt, so dass im Brandfall verhindert wird, dass sich das Brandschutzmaterial 12 nach außen ausdehnt und somit eine Hauptausdehnungsrichtung nach innen zum Verschließen der Öffnung vorgegeben ist.

Die Befestigungsmittel 20 dienen zum Befestigen des Gehäuses 16 und damit der Brandschutzmanschette 10 an der Leitung oder - vorzugsweise - an der Wand oder Decke, durch die die Leitung hindurchgeht.

Der Verschluss 22 dient zum Verbinden von Endbereichen 26, 28 des Gehäuses 16 und ist derart ausgebildet, dass mehrere Verschlusspositionen möglich sind, um so eine Anpassung des Umfangs des Gehäuses 16 an unterschiedliche Leitungsdurchmesser zu erzielen.

Die Befestigungseinrichtung 24 dient zum Fixieren der Streifen 14 aus Brandschutzmaterial 12 an dem Gehäuse 16.

Das Gehäuse 16 weist den Mantel 18 auf, der sich in Längsrichtung des Blechmaterials, aus dem das Gehäuse 16 gebildet ist, erstreckt und sich im Einsatz um die Leitung in Umfangsrichtung um die Leitung herum erstreckt. Der Mantel 18 weist eine erste Längsseite 30 und eine zweite Längsseite 32 auf, die sich in Längsrichtung des Gehäuses 16 und somit bei bestimmungsgemäßen Gebrauch der Brandschutzmanschette in Umfangsrichtung um die Leitung erstrecken. Die Befestigungsmittel 20 sind an einer der Längsseiten 30, 32 ausgebildet und weisen von dieser Längsseite, z.B. von der ersten Längsseite 30, abstrebende Haltelaschen 34 auf, die mit einer Befestigungsmittelöffnung 36 für Befestiger, wie z.B. Schrauben (nicht dargestellt), eines Wandbefestigers ausgebildet sind. Diese mit Befestigungsmittel 20 versehene Längsseite, z.B. die erste Längsseite 30, wird bei Einsatz der Brandschutzmanschette 10 auf die Wand oder Decke zu angeordnet, um das Gehäuse 16 und somit die Brandschutzmanschette 10 durch die Wandbefestiger mittels den Haltelaschen 34 zu befestigen. An der anderen Längsseite, z.B. der zweiten Längsseite 32, sind an dem Mantel 18 nach innen gerichtete Flanschabschnitte 40 vorgesehen, welche einen Anschlag oder eine Begrenzung für die Streifen 14 aus Brandschutzmaterial 12 bilden.

Der Verschluss 22 weist an dem ersten Endbereich 26 wenigstens ein erstes Erfassungselement 42 und an dem zweiten Endbereich 28 mehrere voneinander beabstandete zweite Erfassungselemente 44 auf, wobei die zweiten Erfassungselemente 44 komplementär zu den ersten Erfassungselementen 42 ausgebildet sind, so dass das erste Erfassungselement 42 und wenigstens eines der zweiten Erfassungselemente 44 in formschlüssigen Eingriff bringbar sind. Dadurch, dass eine Reihe von zweiten Erfassungselementen 44 vorgesehen ist, die wahlweise zur Fixierung des wenigstens einen ersten Erfassungselements 42 herangezogen werden können, lässt sich eine Anpassung im Durchmesser des Gehäuses 16 erreichen, um so das Brandschutzmaterial 12 auf unterschiedlich dicken Leitungen zu befestigen.

Allgemein kann dadurch eine Längenänderung des Gehäuses 16 vorgenommen werden. Eine mögliche Längenänderung kann auch dazu dienen, je nach Erfordernissen mehrere Lagen Brandschutzmaterial 12 vorsehen zu können oder weniger Lagen Brandschutzmaterial 12 vorsehen zu können. Durch Längenänderung des Gehäuses 16 kann auch der Kraftschluss und die Spannkraft eingestellt werden. Auch kann das Gehäuse 16 in einer vorbestimmten Größe für eine größere Variantenbreite von Leitungen mit unterschiedlichen Durchmessern verwendet werden.

Durch die Befestigungseinrichtung 24 lassen sich die Streifen 14 Brandschutzmaterial 12 an dem Gehäuse 16 fixieren, so dass Längenänderungen ohne Aufwerfungen von Brandschutzmaterial 12 möglich sind.

Für weitere Einzelheiten zu möglichen Ausführungen der Wand- oder Deckendurchführung, zu den möglichen Materialien, zu den möglichen Materialdicken und Dimensionen sowie für mögliche zusätzliche Verwendungen oder zusätzliche Anbauteile der Brandschutzmanschette 10 wird auf die vorerwähnten Literaturstellen [1] bis [4] verwiesen.

In den Fig. 1 bis 5 ist eine erste Ausführungsform der Brandschutzmanschette 10 mit einer ersten Ausführungsform des Gehäuses 16 dargestellt, während in den Fig. 6 bis 10 eine nicht erfindungsgemässe Form des Gehäuses 16 für eine andere Brandschutzmanschette 10 dargestellt ist.

Während die gemeinsamen Merkmale der unterschiedlichen Ausführungsform der Brandschutzmanschette 10 voranstehend erläutert worden sind, wird im Folgenden auf die unterschiedlichen Merkmale der unterschiedlichen Ausführungsformen eingegangen.

Die Ausführungsformen stellen jedoch nur Beispiele für die Brandschutzmanschette 10 dar. Weitere Ausführungsbeispiele ergeben sich durch Kombinationen der unterschiedlichen im Folgenden näher erläuterten Merkmale. Z.B. kann der im Folgenden näher erläuterte Verschluss 22 der ersten Ausführungsform der Brandschutzmanschette 10 auch an der zweiten Ausführungsform der Brandschutzmanschette 10 verwendet werden, und die im Folgenden näher erläuterte besondere Ausgestaltung der Befestigungseinrichtung 24 bei der zweiten Ausführungsform des Gehäuses 16 kann auch bei dem Gehäuse 16 der Brandschutzmanschette 10 gemäß der ersten Ausführungsform verwendet werden. Auch kann die besondere Ausbildung der Befestigungsmittel 20 der zweiten Ausführungsform bei der ersten Ausführungsform verwendet werden. Schließlich kann auch die im Folgenden bei der ersten Ausführungsform erläuterte Aufteilung des Gehäuses 16 auch bei dem Gehäuse 16 der zweiten Ausführungsform eingesetzt werden. Beliebige weitere Kombinationen sind ebenfalls möglich.

Im Folgenden wird ein Ausführungsbeispiel der Brandschutzmanschette 10 näher erläutert, welches in den Fig. 1 bis 5 näher dargestellt ist.

Bei dieser Ausführungsform der Brandschutzmanschette 10 weist das Gehäuse 16 mehrere Gehäuseteile, nämlich wenigstens ein erstes Teilgehäuse 46 und ein zweites Teilgehäuse 48, auf. Hierzu ist das Gehäuse 16 in Längsrichtung, also bei Einsatz um die Leitung herum in Umfangsrichtung, aufgeteilt. Beispielsweise bilden das erste Teilgehäuse 46 und das zweite Teilgehäuse 48 eine erste Gehäusehälfte und eine zweite Gehäusehälfte. Es ist aber auch eine Aufteilung in eine größere Anzahl von Teilgehäusen möglich.

Die Teilgehäuse 46, 48 sind an einem Ende mittels des Verschlusses 22 aneinander befestigbar. Hierzu weist das erste Teilgehäuse 46 den ersten Endbereich 26 auf, und das zweite Teilgehäuse 48 weist den zweiten Endbereich 28 auf. Auf der gegenüberliegenden Seite sind das erste Teilgehäuse 46 und das zweite Teilgehäuse 48 aneinander gelenkig angelenkt. Hierzu ist ein Scharnier 50 vorgesehen, das derart ausgebildet ist, dass die Teilgehäuse 46, 48 leicht aneinander befestigbar sind und voneinander lösbar sind. Sind mehr als zwei Teilgehäuse vorgesehen, dann kann der Verschluss 22 zwischen dem ersten und dem zweiten Teilgehäuse vorgesehen sein, während ansonsten die Teilgehäuse mittels jeweils einem Scharnier 50 dazwischen verbunden sind. Das Scharnier 50 weist an einem der Teilgehäuse 46 einen Haken 52, und an dem anderen Teilgehäuse 48 ist eine Hakenaufnahmeöffnung 54 vorgesehen.

Die Hakenaufnahmeöffnung 54 ist z.B. durch eine rechteckige Öffnung gebildet. Der Haken 52 ist beispielsweise durch Bördelung einer in Umfangsrichtung vorspringenden Umfangslasche gebildet. So erfassen der Haken 52 und die Hakenaufnahmeöffnung 54 sich über einen Großteil der Höhe oder Breite des Mantels 18, wie dies in Fig. 2 dargestellt ist.

Durch die Ausbildung als Haken 52 und Hakenaufnahmeöffnung 54 lassen sich die beiden Teile des Scharniers 50 leicht voreinander lösen und aneinander fixieren, so dass bei geöffnetem Verschluss 22 das erste Teilgehäuse 46 und das zweite Teilgehäuse 48 leicht voneinander trennbar und auch leicht aneinander befestigbar sind.

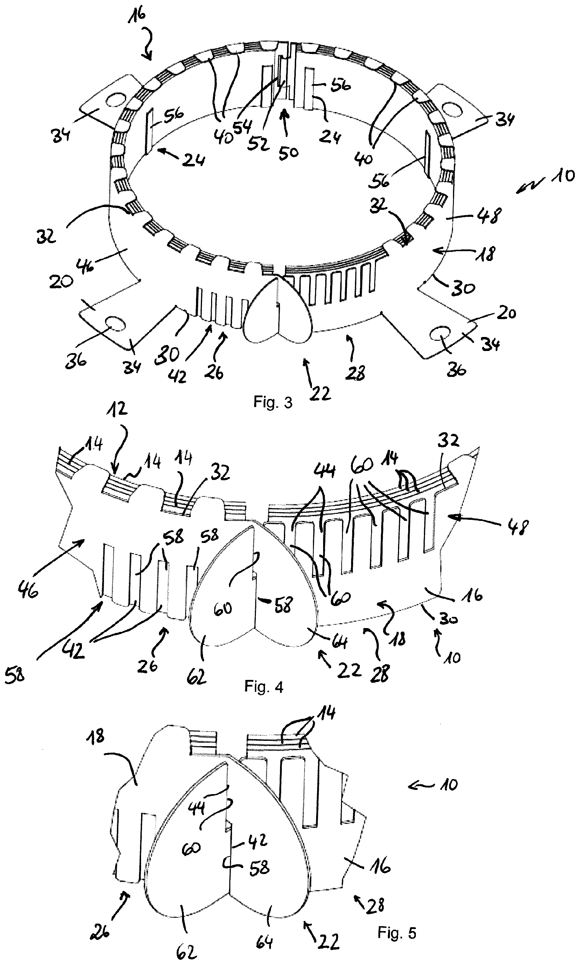

Vorzugsweise ist der Haken 52 nach außen hin geöffnet, wie dies in Fig. 1 dargestellt ist. So lässt sich ein Einhaken leicht auch von der gegenüberliegenden Seite der Leitung aus, also von Seiten des Verschlusses aus, bewerkstelligen. Die Haltelaschen 34 der Befestigungsmittel 20 sind integral mit dem Mantel 18 ausgebildet und lassen sich entsprechend nach außen umbiegen, um die in Fig. 3 dargestellte Konfiguration zu erreichen.

An dem Innenumfang des Mantels 18 sind in jedem Teilgehäuse 46, 48 mehrere Lagen Brandschutzmaterial 12 vorgesehen.

Hierzu sind als Befestigungseinrichtung 24 mehrere Umbiegelaschen 56 vorgesehen, die an der mit den Haltelaschen 34 versehenen Längsseite 30 - also der Längsseite gegenüberliegend den Flanschabschnitten 40 - von dieser Längsseite 30 abragen. Bei der Herstellung der Brandschutzmanschette 10 werden die Streifen 14 Brandschutzmaterial in jedes Teilgehäuse 46 entsprechend der Länge des Teilgehäuses eingelegt, bis sie gegen die Flanschabschnitte 40 anstoßen und anschließend durch Umbiegen der Umbiegelaschen 56 an dem Innenumfang des Mantels 18 fixiert. So kann die Brandschutzmanschette 10 in der in den Fig. 1 bis 5 dargestellten Ausgestaltung bereits mit Brandschutzmaterial 12 versehen an die Baustelle geliefert werden und dort in einem montiert werden.

Wie aus den Fig. 3 bis 5 ersichtlich, weist der Verschluss 22 der ersten Ausführungsform als Erfassungselemente 42, 44 Schlitze 58, 60 auf, wobei bei einer nicht näher dargestellten Ausführungsform nur ein erster Schlitz 58 an dem ersten Endbereich 26 und eine Reihe von zueinander beabstandeten zweiten Schlitzen 60 vorgesehen sind. Bei der dargestellten bevorzugten Ausgestaltung sind mehrere erste Schlitze 58 und mehrere zweite Schlitze 60 vorgesehen. Besonders bevorzugt ist die Anordnung der ersten Schlitze 58 und der zweiten Schlitze 60 symmetrisch zueinander.

Der wenigstens eine erste Schlitz 58 erstreckt sich von der ersten Längsseite 30, wo er offen mündet, in Richtung quer zur Längserstreckung des Gehäuses 16. Die zweiten Schlitze 60 münden an der zweiten Längsseite 32 und erstrecken sich von dieser Öffnung quer zur Längsrichtung des Gehäuses 16 (nach oben bzw. unten in den Fig. 3 bis 5). So kann der erste Endbereich 26 durch an dem jeweils ausgewählten Schlitz 58, 60 ausgebildete Bereiche ineinandergehakt werden. Dadurch, dass eine Reihe von ersten Schlitzen 58 und eine Reihe von zweiten Schlitzen 60 vorgesehen ist, die sich vorzugsweise über einen Umfangsbereich des Gehäuses erstrecken, der zwischen 10° und 90°, vorzugsweise zwischen 60° und 30°, und mehr vorzugsweise zwischen 50° und 40° erstreckt, kann eine Anpassung des Umfangs des Gehäuses 16 vorgenommen werden. Somit kann die Länge des Gehäuses 16 und somit der Umfang bzw. der Durchmesser des Gehäuses ausgewählt werden.

Durch die Ausbildung der Erfassungselemente 42, 44 als von gegenüberliegenden Längsseiten 30, 32 ausgehenden Schlitzen 58, 60 ist ein einfaches Einhaken und dennoch eine sichere Befestigung möglich.

Die äußersten Enden 62, 64 der Endbereiche 26, 28 können als Griffe zum Handhaben der Endbereiche 26, 28 beim Einhaken dienen und sind vorzugsweise hierzu schräg nach außen hin abgewinkelt und von ihrer Form her abgerundet.

Wie weiter den Fig. 3 bis 5 entnommen werden kann, erstrecken sich die Schlitze 62, 64 von der jeweiligen Längsseite 30, 32 aus etwas, z.B. 0,1 bis 5 mm, über die Hälfte der Höhe bzw. Breite des Mantels 18 hinaus. So können die Endbereiche 26, 28 vollständig ineinander eingreifen, und die Erstreckung des Mantels in Richtung der Höhe (axiale Erstreckung) kann auch im Bereich des Verschlusses erhalten bleiben.

Die Anzahl der zweiten Schlitze 60 kann zwischen 2 und 20 betragen. Die Anzahl der ersten Schlitze 58 kann zwischen 1 und 20 betragen. Vorzugsweise besteht zwischen den ersten Schlitzen 58 ein jeweils gleicher Abstand. Auch besteht vorzugsweise zwischen den zweiten Schlitzen 60 ein gleicher Abstand. Der Abstand zwischen den ersten Schlitzen 58 und der Abstand zwischen den zweiten Schlitzen 60 kann gleich sein, was den Einsatz von gleichen Stanzwerkzeugen bei der Herstellung ermöglicht. Der Abstand zwischen den ersten Schlitzen 58 und den zweiten Schlitzen 60 kann auch unterschiedlich sein, was eine größere Variabilität bei der Längenveränderung des Gehäuses 16 ermöglicht.

Die Streifen 14 aus Brandschutzmaterial 12 sind durch die Befestigungseinrichtung 24 in Umfangsrichtung verschiebbar gehalten, so dass sie bei der Längenveränderung des Gehäuses verschoben werden können.

Für weitere Einzelheiten zur möglichen weiteren Ausbildung der Brandschutzmanschette 10 der ersten Ausführungsform, deren möglichen Verwendungen und möglichen damit gebildeten Wand- oder Deckendurchführungen sowie zur Montage wird ausdrücklich auf die Literaturstellen [1] und [2] verwiesen.

Im Folgenden wird anhand der Figuren 6 bis 10 eine andere, nicht erfindungsgemässe, Form des Gehäuses 16 zum Bilden einer Brandschutzmanschette 10 näher erläutert.

Der Verschluss 22 weist bei dieser Ausführungsform an dem ersten Endbereich 26 eine durch Verlängerung des Mantels 18 in Umfangsrichtung gebildete und sich in Umfangsrichtung - Längsrichtung des Gehäuses - erstreckende Verschlusslasche 88 auf, an der mehrere erste Erfassungselemente 42 ausgebildet sind.

Der zweite Endbereich 28 weist eine Reihe von in Umfangsrichtung aufeinanderfolgender Segmente 68 auf, welche zwischen sich Sollbruchlinien 70, beispielsweise gebildet durch eine in Querrichtung des Mantels verlaufende Kerbe 72, getrennt sind. An den Segmenten 68 sind die zweiten Erfassungselemente 44 ausgebildet.

Einige der Erfassungselemente 42, 44 sind durch ausbiegbare Laschen 74 gebildet, die durch Ausstanzen von entsprechenden Öffnungen in dem Mantel 18 und Stehenlassen einer Zunge als ausbiegbare Lasche 74 ausgebildet sind.

Die Öffnungen sind als U-förmige Öffnungen 76 oder als C-förmige Öffnungen 78 ausgebildet. Die Ausrichtung der Öffnungen 76, 78 ist bei in Umfangsrichtung aufeinanderfolgenden Erfassungselementen 44 entgegengesetzt, so dass die Laschen 74 von in Umfangsrichtung aufeinanderfolgenden Erfassungselementen 44 von entgegengesetzten Randbereichen der Öffnungen 76 abstreben und eine der Zungen der Laschen 74 nach oben und die darauffolgende Zunge der Laschen 74 nach unten gerichtet ist.

Das zu den Laschen 74 komplementäre Erfassungselement 42 ist als Aufnahmeöffnung 80 ausgebildet, in die die Lasche 74 hineingebogen werden kann und um deren Rand die Lasche 74 herumgebogen werden kann.

Bei dem dargestellten Ausführungsbeispiel sind die ersten Erfassungselemente 42, die an der Verschlusslasche 66 ausgebildet sind, als Aufnahmeöffnung 80 vorgesehen. Hierbei sind eine erste Aufnahmeöffnung 80 und eine zweite Aufnahmeöffnung 80 mit dem gleichen Abstand beabstandet, wie benachbarte ausbiegbare Laschen 74 an dem zweiten Endbereich 28 als zweite Erfassungselemente 44 voneinander beabstandet sind.

Der zweite Endbereich 28 weist in dem dargestellten Ausführungsbeispiel die Segmente 68 auf.

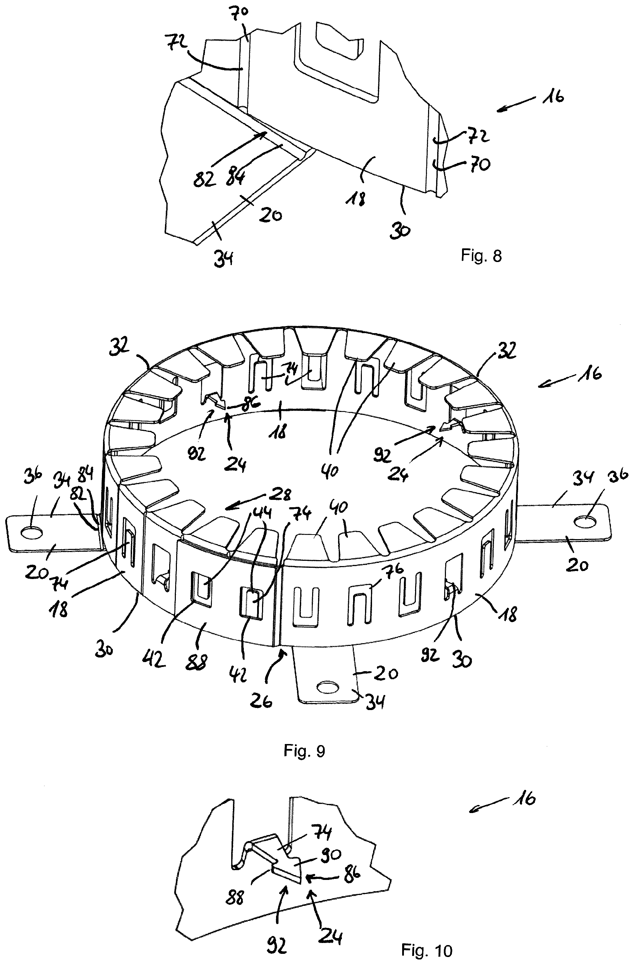

Weiter sind, wie allgemein und am Beispiel des zuvor erläuterten Ausführungsbeispiels erläutert, die Haltelaschen 34 vorgesehen. Wenigstens eine der Haltelaschen 34, insbesondere eine Haltelasche 34, die an dem Endbereich 28 ausgebildet ist, welcher die Segmente 68 aufweist, ist mit einer Sollbruchstelle 82 versehen. An der Sollbruchstelle kann die Haltelasche 34 abgebrochen. Wie aus den Fig. 7 und 8 ersichtlich, kann die Sollbruchstelle 82 durch eine Kerbe 84 ausgebildet sein.

Selbstverständlich können die Sollbruchstellen 70, 82 auch auf andere Weise, beispielsweise durch Perforationen oder dergleichen, ausgebildet sein.

Wie aus den Fig. 6 und 9 hervorgeht, sind die Öffnungen 76, 78 über den gesamten Umfang des Mantels 18 verteilt vorgesehen.

Mehrere der so gebildeten ausbiegbaren Laschen 74 weisen eine Einstechspitze 86 auf.

Bevorzugt ist außer der Einstechspitze 86 am freien Ende dieser ausbiegbaren Lasche 74 noch ein Widerhakenelement 88 vorgesehen. Die Einstechspitze 86 und das Widerhakenelement 88 können auf verschiedene Art und Weise geformt sein. In dem dargestellten Ausführungsbeispiel ist die Einstechspitze 86 als Pfeilspitze 90 oder mit anderen Worten als eine Art Tannenbaumform ausgebildet.

Die mit Einstechspitzen 86 versehenen ausbiegbaren Laschen 74 werden im Folgenden als Einstechlaschen 92 bezeichnet.

Die Einstechlaschen 92 sind verteilt am Mantel 18 vorgesehen, wobei sich zwischen den Einstechlaschen 92 mehrere normale ausbiegbare Laschen 74 ohne Einstechspitze 86 befinden, die, wie zuvor erläutert, wechselweise in der einen Richtung oder der anderen Richtung quer zur Längsrichtung des Gehäuses 16 ausgerichtet sind.

Im Folgenden wird erläutert, wie mit diesem Gehäuse 16 gemäß der in den Fig. 6 bis 10 gezeigten Ausführungsform die Brandschutzmanschette 10 gebildet werden kann.

Bei einer Wand- oder Deckendurchführung für eine Leitung (nicht dargestellt) werden zunächst um die Leitung herum ein oder mehrere Streifen 14 aus Brandschutzmaterial 12 herumgelegt bzw. herumgewickelt. Es können je nach Bedarf mehrere Lagen Brandschutzmaterial 12 um die Leitung gewickelt werden. Beispielsweise werden so viele Lagen Brandschutzmaterial 12 aufgetragen, dass deren radiale Erstreckung größer als die radiale Erstreckung des Flanschabschnittes 40 ist.

Die Länge des Gehäuses 16 wird zuvor entsprechend des gewünschten Umfangs des Gehäuses 16 eingestellt. Hierzu werden gegebenenfalls ein oder mehrere der Segmente 68 abgebrochen. Gegebenenfalls wird auch die abbrechbare Haltelasche 34 abgebrochen.

Vor der Montage des Gehäuses werden hierzu die Einstechlaschen 92 nach innen gebogen, wie dies aus den Fig. 6, 9 und 10 ersichtlich ist. Die Haltelaschen 34 werden nach außen gebogen.

Anschließend wird das Gehäuse 16 gemäß den Ausführungsformen aus den Fig. 6 bis 10 um diese Streifen 14 aus Brandschutzmaterial 12 herumgelegt, wobei die Haltelaschen 34 zu der Wandung hinweisen und die Flanschabschnitte 40 auf den Streifen 14 aufliegen können. Der Mantel 18 wird in Umfangsrichtung um die Streifen 14 gelegt.

Dann werden die beiden Endbereiche 26, 28 aufeinander zugezogen und so der Mantel 18 fest um die Streifen 14 aus Brandschutzmaterial 12 herumgelegt.

Beim Festziehen des Mantels stechen die Einstechlaschen 92 mit ihrer Einstechspitze 86 in die Streifen 14 aus Brandschutzmaterial 12 hinein und fixieren so das Brandschutzmaterial 12 an dem Mantel 18.

Die Endbereiche 26, 28 werden so lange aufeinander gezogen, bis zwei benachbarte der ausbiegbaren Laschen 74 mit den Aufnahmeöffnungen 80 fluchten. Die ausbiegbaren Laschen 74 werden dann in die entsprechenden Aufnahmeöffnung 80 hinein umgebogen und um den entsprechenden Rand der Aufnahmeöffnung 80 herumgebogen. Hierdurch wird der Verschluss 22 geschlossen und das Gehäuse 16 fixiert und somit das Brandschutzmaterial 12 an der Leitung fixiert. Weiter werden die verbleibenden Haltelaschen 34 mittels hier nicht näher dargestellter Wandbefestiger oder Deckenbefestiger an der Wand bzw. Decke, durch die die Leitung hindurchgeführt ist, befestigt.

Für weitere Einzelheiten zu den Materialien, insbesondere dem Brandschutzmaterial, der Anwendung und Montage sowie den herstellbaren Wand- oder Deckendurchführungen wird bezüglich der zweiten Ausführungsform auf die Literaturstelle [3] verwiesen.

### Bezugszeichenliste:

- 10: Brandschutzmanschette
- 12: Brandschutzmaterial
- 14: Streifen
- 16: Gehäuse
- 18: Mantel
- 20: Befestigungsmittel
- 22: Verschluss
- 24: Befestigungseinrichtung
- 26: erster Endbereich
- 28: zweiter Endbereich
- 30: erste Längsseite
- 32: zweite Längsseite
- 34: Haltelaschen
- 36: Befestigungsmittelöffnung
- 40: Flanschabschnitt
- 42: erstes Erfassungselement
- 44: zweites Erfassungselement
- 46: erstes Teilgehäuse
- 48: zweites Teilgehäuse
- 50: Scharnier
- 52: Haken
- 54: Hakenaufnahmeöffnung
- 56: Umbiegelaschen
- 58: erste Schlitze
- 60: zweite Schlitze
- 62: erstes Ende
- 64: zweites Ende
- 66: Verschlusslasche
- 68: Segment
- 70: Sollbruchlinie
- 72: Kerbe
- 74: ausbiegbare Lasche
- 76: U-förmige Öffnung
- 78: C-förmige Öffnung
- 80: Aufnahmeöffnung
- 82: Sollbruchstelle
- 84: Kerbe
- 86: Einstechspitze
- 88: Widerhakenelement
- 90: Pfeilspitze
- 92: Einstechlasche

## Patentansprüche

1. Gehäuse (16) für eine Brandschutzmanschette (10), zum Abschotten einer Wand- oder Deckendurchführung für eine Leitung, umfassend einen Verschluss (22) zum aneinander Fixieren eines ersten und eines zweiten Endbereiches (26, 28) des bei Benutzung der Brandschutzmanschette (10) um eine Leitung geschlungenen Gehäuses (16), wobei der Verschluss (22) an dem ersten Endbereich (26) wenigstens einen seitlichen ersten Schlitz (58) aufweist, der sich in einer Richtung quer zu der Erstreckungsrichtung des Gehäuses (16) erstreckt und an einer ersten Längsseite (30) des Gehäuses (16) offen mündet, **dadurch gekennzeichnet,**
**dass** der Verschluss (22) an dem zweiten Endbereich (28) mehrere in Erstreckungsrichtung des Gehäuses (16) beabstandete seitliche zweite Schlitze (60) aufweist, die sich in einer Richtung quer zu der Erstreckungsrichtung des Gehäuses (16) erstrecken und an der zweiten Längsseite (32) des Gehäuses (16) offen münden, wobei der erste und der zweite Endbereich (26, 28) mit ihren Schlitzen (58, 60) ineinanderhakbar sind.

2. Gehäuse nach Anspruch 1, **gekennzeichnet durch** mehrere ausbiegbare Laschen (74) zum Fixieren wenigstens eines Streifens (14) Brandschutzmaterial (12) an einer Innenwandung des Gehäuses (16).

3. Brandschutzmanschette (10) zum Abschotten einer Wand- oder Deckendurchführung für eine Leitung, mit wenigstens einem Streifen (14) aus intumeszierendem Brandschutzmaterial (12) und einem Gehäuse (16) nach Anspruch 1.

4. Brandschutzmanschette (10) nach Anspruch 3, **dadurch gekennzeichnet,**
**dass** der Verschluss (22) an dem ersten Endbereich (26) mehrere in Längsrichtung des Gehäuses (16) beabstandete erste Schlitze (58) aufweist.

5. Brandschutzmanschette (10) nach Anspruch 4, **dadurch gekennzeichnet,**
**dass** die Anordnung erster Schlitze (58) an dem ersten Endbereich (26) symmetrisch zu der Anordnung zweiter Schlitze (60) an dem zweiten Endbereich (28) ist.

6. Brandschutzmanschette (10) nach einem der Ansprüche 3 bis 5, **dadurch gekennzeichnet,**
**dass** das Gehäuse (16) in mehrere Teilgehäuse (46, 48) unterteilt ist, die aneinander anlenkbar sind.

7. Brandschutzmanschette (10) nach Anspruch 6, **dadurch gekennzeichnet,**
**dass** ein erstes und ein zweites Teilgehäuse (46, 48) mittels eines Scharniers (50) aneinander angelenkt sind, welches einen Haken (52) an dem ersten Teilgehäuse (46) und eine Hakenaufnahmeöffnung (54) an dem zweiten Teilgehäuse (48) aufweist.

8. Brandschutzmanschette (10) nach einem der Ansprüche 6 oder 7, **dadurch gekennzeichnet,**
**dass** an der Innenseite eines jeden Teilgehäuses (46, 48) wenigstens ein Streifen (14) des Brandschutzmaterials (12) befestigt ist.

9. Brandschutzmanschette (10) nach einem der Ansprüche 3 bis 8, **dadurch gekennzeichnet,**
**dass** sich die Schlitze (58, 60) von der jeweiligen Längsseite (30, 32) bis zur Mitte des Gehäuses (16) oder über die Mitte des Gehäuses (16) hinaus erstrecken.

10. Brandschutzmanschette (10) nach einem der Ansprüche 3 bis 9, **dadurch gekennzeichnet,**
**dass** das Gehäuse (16) mehrere ausbiegbare Laschen (74) zum Fixieren des wenigstens einen Streifen (14) aus Brandschutzmaterial (12) an der Innenseite des Gehäuses (16) aufweist.

11. Brandschutzmanschette (10) nach Anspruch 10, **dadurch gekennzeichnet,**
**dass** die ausbiegbaren Laschen (74) eine Spitze (86) zum Einstechen in den wenigstens einen Streifen (14) aus Brandschutzmaterial (12) aufweisen.

12. Brandschutzmanschette (10) nach Anspruch 11, **dadurch gekennzeichnet,**
**dass** die Spitze (86) ein Widerhakenelement (88) zum Festhalten des Brandschutzmaterials (12) und/oder eine Pfeilspitzenform aufweist.

13. Brandschutzmanschette (10) nach einem der Ansprüche 10 bis 12, **dadurch gekennzeichnet,**
**dass** die Laschen (74) an einem Randbereich einer in einem Mantelbereich des Gehäuses (16) ausgebildeten, vollständig von dem Mantelbereich umgebenen Öffnung ausgebildet sind und/oder von einer U-förmigen (76) oder C-förmigen Ausstanzöffnung (78) umgeben sind.

14. Wand- oder Deckendurchführung für ein Kunststoffrohr oder eine sonstige Leitung, umfassend wenigstens eine Brandschutzmanschette (10) nach einem der Ansprüche 3 bis 13.

## Claims

1. Housing (16) for a fire protection collar (10) for sealing off a wall or ceiling feedthrough for a conduit, comprising a closure (22) for fixing together first and second end portions (26, 28) of the housing (16) wrapped around a conduit when the fire protection collar (10) is in use, the closure (22) having at the first end portion (26) at least one lateral first slot (58) extending in a direction transverse to the direction of extension of the housing (16) and opening at a first longitudinal side (30) of the housing (16),
**characterized in that**
the closure (22) has, at the second end portion (28), a plurality of lateral second slots (60) which are spaced apart in the direction in which the housing (16) extends and which extend in a direction transverse to the direction in which the housing (16) extends and open out at the second longitudinal side (32) of the housing (16), it being possible for the first and second end portions (26, 28) to be hooked into one another by their slots (58, 60).

2. Housing according to claim 1,
**characterized by** a plurality of outwardly deflectable tabs (74) for securing at least one strip (14) of fire protection material (12) to an inner wall of the housing (16).

3. Fire protection collar (10) for closing off a wall or ceiling feedthrough for a conduit, comprising at least one strip (14) of intumescent fire protection material (12) and a housing (16) according to claim 1.

4. Fire protection collar (10) according to claim 3,
**characterized in that**
the closure (22) has a plurality of first slots (58) spaced along the longitudinal direction of the housing (16) at the first end portion (26).

5. Fire protection collar (10) according to claim 4,
**characterized in that**
the arrangement of first slots (58) at the first end portion (26) is symmetrical to the arrangement of second slots (60) at the second end portion (28).

6. Fire protection collar (10) according to any one of claims 3 to 5,
**characterized in that**
the housing (16) is divided into a first and a second partial housing (46, 48) which are hinged to each other.

7. Fire protection collar (10) according to claim 6,
**characterized in that**
a first and a second partial housing (46, 48) are hinged to each other by means of a hinge (50) having a hook (52) on the first partial housing (46) and a hook receiving opening (54) on the second partial housing (48).

8. Fire protection collar (10) according to any of claims 6 or 7,
**characterized in that**
at least one strip (14) of the fire protection material (12) is attached to the inside of each partial housing (46, 48).

9. Fire protection collar (10) according to one of the claims 3 to 8,
**characterized in that**
the slots (58, 60) extend from the respective longitudinal side (30, 32) to the center of the housing (16) or beyond the center of the housing (16).

10. Fire protection collar (10) according to any one of claims 3 to 9,
**characterized in that**
the housing (16) has a plurality of outwardly deflectable tabs (74) for fixing the at least one strip (14) of fire protection material (12) to the inside of the housing (16).

11. Fire protection collar (10) according to claim 10,
**characterized in that**
the deflectable tabs (74) have a tip (86) for piercing the at least one strip (14) of fire protection material (12).

12. Fire protection collar (10) according to claim 11,
**characterized in that**
the tip (86) has a barb element (88) for retaining the fire protection material (12) and/or an arrowhead shape.

13. Fire protection collar (10) according to any one of claims 10 to 12,
**characterized in**
**that** the tabs (74) are formed at an edge portion of an opening formed in a shell portion of the housing (16) and completely surrounded by the shell portion and/or are surrounded by a U-shaped (76) or C-shaped punched-out opening (78).

## Revendications

1. Logement (16) pour une manchette de protection contre l'incendie (10) destiné à obturer un passage de mur ou de plafond pour un conduit, comprenant une fermeture (22) pour la fixation mutuelle des première et seconde parties d'extrémité (26, 28) du logement (16) enroulé autour d'un conduit lorsque la manchette de protection contre l'incendie (10) est utilisée, la fermeture (22) ayant sur la première partie d'extrémité (26) au moins une première fente latérale (58) s'étendant dans une direction transversale à la direction d'extension du logement (16) et s'ouvrant au niveau d'un premier côté longitudinal (30) du logement (16),
**caractérisé en ce que**
la fermeture (22) présente sur la deuxième partie d'extrémité (28) plusieurs deuxièmes fentes (60) latérales, espacées dans la direction d'extension du logement (16), qui s'étendent dans une direction transversale à la direction d'extension du logement (16) et s'ouvrant au niveau du second côté longitudinal (30) du logement (16), la première et la deuxième partie d'extrémité (26, 28) pouvant être accrochées l'une dans l'autre par leurs fentes (58, 60).

2. Logement selon la revendication 1,
**caractérisé par** une pluralité de pattes déflectables vers l'extérieur (74) pour fixer au moins une bande (14) de matériau de protection contre l'incendie (12) à une paroi intérieure du logement (16).

3. Manchette de protection contre l'incendie (10) destinée à obturer un passage de mur ou de plafond pour un conduit, comprenant au moins une bande (14) de matériau intumescent de protection contre l'incendie (12) et un logement (16) selon la revendication 1.

4. Manchette de protection contre l'incendie (10) selon la revendication 3,
**caractérisée en ce que**
la fermeture (22) comprend une pluralité de premières fentes (58) espacées le long de la direction longitudinale du logement (16) sur la première partie d'extrémité (26).

5. Manchette de protection contre l'incendie (10) selon la revendication 4,
**caractérisée en ce que**
l'arrangement des premières fentes (58) sur la première partie d'extrémité (26) est symétrique à l'arrangement des secondes fentes (60) sur la seconde partie d'extrémité (28).

6. Manchette de protection contre l'incendie (10) selon l'une quelconque des revendications 3 à 5,
**caractérisée en ce que**
le logement (16) est divisé en un premier et un second logement partiel (46, 48) qui sont articulés l'un à l'autre.

7. Manchette de protection contre l'incendie (10) selon la revendication 6,
**caractérisée en ce que**
un premier et un second logement partiel (46, 48) sont articulés l'un à l'autre au moyen d'une charnière (50) comprenant un crochet (52) sur le premier boîtier partiel (46) et une ouverture de réception de crochet (54) sur le second boîtier partiel (48).

8. Manchette de protection contre l'incendie (10) selon l'une des revendications 6 ou 7,
**caractérisé en ce que**
au moins une bande (14) du matériau de protection contre l'incendie (12) est fixée sur le côté intérieur de chaque logement partiel (46, 48).

9. Manchette de protection contre l'incendie (10) selon l'une quelconque des revendications 3 à 8,
**caractérisée en ce que**
les fentes (58, 60) s'étendent depuis le côté longitudinal respectif (30, 32) jusqu'au centre du logement (16) ou au-delà du centre du logement (16).

10. Manchette de protection contre l'incendie (10) selon l'une quelconque des revendications 3 à 9,
**caractérisée en ce que**
le logement (16) comprend une pluralité de pattes déflectables vers l'extérieur (74) pour fixer ladite au moins une bande (14) de matériau de protection contre l'incendie (12) à l'intérieur du logement (16).

11. Manchette de protection contre l'incendie (10) selon la revendication 10,
**caractérisée en ce que**
les pattes déflectables vers l'extérieur (74) comprennent une pointe (86) pour percer ladite au moins une bande (14) de matériau de protection contre l'incendie (12).

12. Manchette de protection contre l'incendie (10) selon la revendication 11,
**caractérisée en ce que**
la pointe (86) comprend un élément de barbe (88) pour retenir le matériau de protection contre l'incendie (12) et/ou une forme de pointe de flèche.

13. Manchette de protection contre l'incendie (10) selon l'une quelconque des revendications 10 à 12,
**caractérisée en ce que**
les pattes (74) sont formées sur une partie de bord d'une ouverture formée dans une partie de coque du logement (16) et complètement entourées par la partie de coque, et/ou sont entourées par une ouverture découpée en forme de U (76) ou de C (78).
